# EUROPÄISCHE PATENTSCHRIFT

(11) **EP 4 514 627 B1**
(45) Veröffentlichungstag und Bekanntmachung des Hinweises auf die Patenterteilung: **06.05.2026**
(21) Anmeldenummer: 23711670.2
(22) Anmeldetag: 07.03.2023
(51) Int. Cl.: B60C 11/03, B60C 11/12

(54) **FAHRZEUGREIFEN**
VEHICLE TIRE
PNEUMATIQUE DE VÉHICULE

(30) Priorität: 29.04.2022 DE 102022204222
(43) Veröffentlichungstag der Anmeldung: 05.03.2025
(73) Patentinhaber: Continental Reifen Deutschland GmbH, 30175 Hannover (DE)
(72) Erfinder: BEHR, Ulrich, 30175 Hannover (DE); HERBST, Stephan, 30175 Hannover (DE); KHOO, Jan-Sen, 30175 Hannover (DE)
(74) Vertreter: Continental Corporation
(86) Internationale Anmeldenummer: PCT/DE2023/200048
(87) Internationale Veröffentlichungsnummer: WO 2023/208292

(56) Entgegenhaltungen:
- EP-A1- 0 625 436
- EP-A1- 0 911 187
- DE-T2- 69 415 281
- JP-A- 2000 043 510
- JP-A- H02 303 908
- JP-A- S62 241 707
- US-A1- 2021 331 529

## Beschreibung

Die Erfindung betrifft einen Fahrzeugluftreifen mit einem Laufstreifen mit durch Rillen, beispielsweise bis auf die vorgesehene Profiltiefe ausgeführte Umfangsrillen und/oder Querrillen, begrenzten Profilpositiven, wie Profilrippen oder Profilblöcken, mit einer an der Laufstreifenperipherie befindlichen Außenfläche und mit Einschnitten, welche von einer Rille ausgehend sich in das jeweilige Profilpositiv erstrecken und innerhalb desselben enden, wobei jeder Einschnitt innerhalb des Profilpositivs von einem L-förmig verlaufenden rohrförmigen Kanal mit einem kreisförmigen Querschnitt umlaufen ist, welcher einen ausschließlich an der Außenfläche des Profilpositivs nach außen mündenden und sich insbesondere in radialer Richtung erstreckenden Kanalabschnitt und einen insbesondere parallel zur Außenfläche des Profilpositivs entlang des Einschnittgrundes verlaufenden Kanalabschnitt aufweist, welcher mit dem Einschnitt an der Rille nach außen mündet.

Ein derartiger Fahrzeugluftreifen ist beispielsweise aus der JP S62 241 712 A bekannt. Dieser Fahrzeugluftreifen weist einen Laufstreifen mit einem Blockprofil mit von Querrillen und Umfangsrillen umlaufenen Profilblöcken auf. Die Profilblöcke sind jeweils mit einer Anzahl von in einem Ausführungsbeispiel in axialer Richtung orientierten Einschnitten versehen, die von Umfangsrillen ausgehend in den jeweiligen Profilblock hineinverlaufen und innerhalb des Profilblockes von einem L-förmig verlaufenden rohrförmigen Kanal umlaufen sind. Dieser Kanal soll zu einer Verbesserung der Ableitung von Schmelzwasser beitragen, welches sich zwischen dem Reifen und einem schnee- oder eisbedeckten Untergrund bei einer Temperatur um 0° C bildet.

Die JP S62 241 707 A offenbart einen weiteren Fahrzeugluftreifen der eingangs genannten Art. Dieser Fahrzeugluftreifen weist einen Laufstreifen mit Profilblöcken mit Einschnitten auf, welche einseitig innerhalb der Profilblöcke enden und jeweils von einem L-förmig verlaufenden, rohrförmigen Kanal umlaufen sind, wobei gemäß einem Ausführungsbeispiel Profilblöcke mit in Draufsicht in axialer Richtung und in Umfangsrichtung verlaufende Einschnitte vorgesehen sind.

Aus der EP 0 625 436 A1 ist ein Fahrzeugreifen mit einem Laufstreifen mit durch Umfangs- und Querrillen voneinander getrennten Profilblöcken bekannt, welche jeweils mit einem Einschnitt mit einer Breite von 0,3 mm bis 1,0 mm, insbesondere von 0,4 mm bis 0,6 mm, versehen sind, wobei sich der Einschnitt ausgehend von einer der Umfangsrillen in den jeweiligen Profilblock hineinerstreckt und innerhalb von diesem endet. Die Einschnitte sind innerhalb des Profilblocks jeweils von einem L-förmig verlaufenden, rohrförmigen Kanal mit einem insbesondere kreisförmigen Querschnitt mit einem konstanten Durchmesser von 2,0 mm bis 8,0 mm umlaufen. Die Kanäle sind für das Wasserableitvermögen günstig und bewirken eine Blockschwingungen reduzierende Luftableitung, wodurch das Abrollgeräusch verringert sein soll.

Die JP 2000 043 510 A offenbart ebenfalls einen Fahrzeugluftreifen der eingangs genannten Art. Dieser weist einen Laufstreifen mit einer schulterseitigen Profilrippe auf, welche mit Einschnitten versehen ist, die entweder an einem im Inneren der Profilrippe in radialer Richtung verlaufenden Kanal enden oder von einem L-förmig verlaufenden Kanal umlaufen sind, welcher einen entlang des Einschnittgrundes verlaufenden, gemeinsam mit dem Einschnitt in die Umfangsrille einmündenden Kanalabschnitt aufweist. Der Durchmesser des Kanals beträgt höchstens 3 mm. Solche Kanäle sollen die Gefahr, dass am rippeninnenseitigen Ende des Einschnittes Risse auftreten, reduzieren.

Aus der JP H02 303 908 A ist ein Fahrzeugluftreifen mit einem Laufstreifen mit Profilblöcken mit Einschnitten mit je einer Einschnittverbreiterung, welche, im Querschnitt betrachtet, in radialer Richtung langgezogen rechteckförmig ausgebildet ist und eine konstante Breite aufweist, bekannt. Die Einschnittverbreiterung kann den sonstigen Einschnitt L-förmig, U-förmig oder liegend U-förmig umgeben. Solche Einschnitte sollen unter anderem für eine gute Nässeperformance sorgen und ein ungleichmäßiges Abriebbild verhindern.

Die EP 0 911 187 A1 offenbart einen Fahrzeugluftriefen, welcher gemäß einem Ausführungsbeispiel einen Laufstreifen mit zu Profilblockreihen gehörenden, durch Querrillen voneinander getrennte Profilblöcken aufweist, welche durch in den Querrillen ausgebildete Grundanhebungen lokale aneinander angebunden sind. Die Profilblöcke sind jeweils mit zwei Einschnitten versehen, welche ausgehend von verschiedenen Umfangsrillen in den jeweiligen Profilblock hineinverlaufen und jeweils von einem L-förmig verlaufenden, rohrförmigen Kanal umlaufen sind. Solche Profilblöcke sollen für das Gummifließverhalten bei der Vulkanisation des Reifens günstig sein und Abblätterungen beim vulkanisierten Reifen vermeiden.

Aus der US 2021/0331529 A1 ist ein Fahrzeugluftreifen mit einem Laufstreifen mit Profilrippen bekannt, welche an der einen Seite von einer herkömmlichen Umfangsrille und an der anderen Seite von einer Umfangsrille, die sich im Querschnitt aus einem radial äußeren, sich V-förmig zur Laufstreifenperipherie verbreiternden Abschnitt, einem einschnittartigen Abschnitt und einem den Rillengrund mitbildenden Kanal zusammensetzt. Die Profilrippen sind mit in die angrenzenden Umfangsrillen einmündenden Einschnitten versehen. Dieser Reifen soll ein gutes Wasserdrainagevermögen aufweisen.

Die DE 694 15 281 T2 offenbart einen Fahrzeugluftreifen mit einem Laufstreifen mit einer Profilblockreihe mit Profilblöcken, die durch Grundanhebungen aneinander angebunden und mit einseitig innerhalb der Profilblöcke endenden Einschnitten versehen sind, die gemäß einem Ausführungsbeispiel jeweils von einem L-förmig verlaufenden Kanal umgeben sind. Ein solcher Laufstreifen soll eine ausgewogene Steifigkeitsverteilung aufweisen.

Der Erfindung liegt die Aufgabe zugrunde, bei einem Fahrzeugluftreifen der eingangs genannten Art bei auf nassem Untergrund abrollenden Reifen die Ableitung von in die Einschnitte eindringendem Wasser in jene Rillen, in welche die Einschnitte einmünden, auf besonders effektive Weise zu verbessern.

Gelöst wird die gestellte Aufgabe erfindungsgemäß dadurch, dass der Einschnitt zur Außenfläche des Profilpositivs eine über seine Erstreckung bis zu dem an der Außenfläche des Profilpositivs nach außen mündenden Kanalabschnitt ausgebildete, nutförmigen Einschnittverbreiterung aufweist, welche an der Außenfläche des Profilpositivs eine Breite aufweist, die 1,60 mm bis 2,70 mm beträgt und an welche in radialer Richtung ein Einschnittabschnitt mit einer konstanten Breite von 0,40 mm bis 1,00 mm anschließt, welcher in den L-förmig verlaufenden Kanal einmündet, dessen Durchmesser um bis zu 1,80 mm größer ist als die Breite des Einschnittabschnittes, wobei die Einschnittverbreiterung und der Einschnittabschnitt gemeinsam mit dem entlang des Einschnittgrundes verlaufenden Kanalabschnitt in die Rille einmünden.

Der Einschnitt setzt sich daher im Wesentlichen aus der Einschnittverbreiterung an der Außenfläche des Profilpositivs, einem schmalen Einschnittabschnitt und einem den Einschnittabschnitt L-förmig umlaufenden, rohrförmigen Kanal zusammen, dessen Durchmesser größer ist als die Breite des Einschnittabschnittes. Diese Kombination aus Einschnittverbreiterung und Kanal sorgt für eine besonders effektive Ableitung von Wasser beim Fahren auf Nässe und reduziert wirkungsvoll eine Aquaplaninggefahr. Der schmale Einschnittabschnitt gewährleistet Abstützeffekte zur Stabilisierung der Profilpositive und unterstützt dadurch ein gute Handlingperformance.

Besonders vorteilhaft bezüglich einer effektiven Wasserableitung ist eine Einschnittverbreiterung, die eine insbesondere konstante Tiefe von 6 % bis 12 % der Profiltiefe aufweist.

Bei einer weiteren vorteilhaften Ausgestaltung der Einschnittverbreiterung setzt sich diese aus zwei über eine lokale Verengung miteinander verbundenen, unterschiedliche, an der Außenfläche des Profilpositivs jedoch insbesondere jeweils konstante Breiten aufweisenden Teilabschnitten zusammen, wobei der breitere Teilabschnitt in die Rille einmündet und der andere in den an der Außenfläche des Profilpositivs nach außen mündenden Kanalabschnitt mündet. Durch den breiteren Teilabschnitt wird Wasser besonders effektiv in Richtung der Rille abgeleitet.

Von besonderem Vorteil ist ferner eine Ausführung, bei der die beiden Teilabschnitte der Einschnittverbreiterung jeweils eine Länge von 40 % bis 60 % der Erstreckungslänge der Einschnittverbreiterung aufweisen. Derart kann Wasser gleichermaßen in dem an der Außenfläche der Profilrippe mündenden Kanalabschnitt und in die Rille abgeleitet werden.

Da die Rille für einen besonders effektive Wasserableitung aus dem Untergrund sorgt, ist es ferner vorteilhaft, wenn die Breite des breiteren Teilabschnittes 2,50 mm bis 3,00 mm beträgt und die Breite des schmäleren Teilabschnittes um 0,10 mm bis 0,30 mm geringer ist als die Breite des breiteren Teilabschnittes.

Eine effektive Wasserableitung wird ferner dadurch unterstützt, dass sich die Einschnittverbreiterung im Querschnitt und vom in radialer Richtung anschließenden Einschnittabschnitt ausgehend nach außen trichterförmig verbreitert. Bei einer alternativen ebenfalls effektiven Ausführung weist die Einschnittverbreiterung einen U-förmigen Querschnitt auf.

Wie bereits erwähnt trägt auch der Kanal zu einer verbesserten Wasserableitung auf nassem Untergrund bei. Diesbezüglich ist vorteilhaft, wenn der Kanal zwischen dem an der Außenfläche des Profilpositivs nach außen mündenden Kanalabschnitt und dem in die Rille mündenden Kanalabschnitt eine Kanalrundung aufweist, die insbesondere kreisbogenförmig verläuft, wobei der Kreisbogen, entlang der Mittellinie des Kanals betrachtet, einen Radius von 2,30 mm bis 3,00 mm aufweist.

Der in die Rille mündende Kanalabschnitt verläuft entlang des Rillengrundes und mündet in die Rille ein. Eine beschleunigte Ableitung von Wasser aus dem Kanal durch diesen Kanalabschnitt wird dadurch erzielt, wenn dieser Kanalabschnitt in drei Teilabschnitte gegliedert ist, wobei der in die Rille mündende Teilabschnitt den größten Durchmesser, der an die Kanalrundung anschließende Teilabschnitt den kleinsten Durchmesser aufweist und wobei sich der mittlere Teilabschnitt ausgehend vom Teilabschnitt mit dem kleinsten Durchmesser in Richtung zum Teilabschnitt mit dem größten Durchmesser trichterförmig erweitert.

Vorteilhafterweise weist der an der Außenfläche des Profilpositivs nach außen mündende Kanalabschnitt gemeinsam mit der Kanalrundung und dem an die Kanalrundung anschließenden Teilabschnitt des in die Rille mündenden Kanalabschnittes einen übereinstimmenden und insbesondere konstanten Durchmesser, welcher 1,20 mm bis 1,60 mm beträgt, auf.

Der in die Rille mündende Teilabschnitt besitzt vorteilhafterweise einen größeren Durchmesser als die anderen Teilabschnitte, wie erwähnt, wobei dieser Durchmesser insbesondere konstant ist und 2,00 mm bis 2,80 mm beträgt.

Je breiter die Teilabschnitte, wie erwähnt, sind umso größer ist vorteilhafterweise auch ihre Länge. Bevorzugt weist daher, jeweils entlang der zentralen Mittellinie des zwischen der Kanalrundung und der Rille verlaufenden Kanalabschnittes ermittelt, der an die Kanalrundung anschließende Teilabschnitt eine Länge von 20 % bis 30 %, der sich trichterförmig erweiternde Teilabschnitt eine Länge von 25 bis 35 % und der in die Rille mündende Teilabschnitt eine Länge von 40 % bis 50 % der Länge des Kanalabschnittes auf.

Um die Wasserableitung von der Einschnittverbreiterung in den an der Außenfläche des Profilpositivs nach außen mündenden Kanalabschnittes zu verbessern, ist bei einer bevorzugten Ausführung vorgesehen, dass der an der Außenfläche des Profilpositivs nach außen mündende Kanalabschnitt mit einer in Draufsicht kreisförmigen Mündungsvertiefung einmündet, welche eine Tiefe aufweist, die der Tiefe der Einschnittverbreiterung entspricht und welche über ihre Tiefenerstreckung einen insbesondere konstanten Durchmesser aufweist, welcher um 0,30 mm bis 0,70 mm größer ist als die Breite des einmündenden Teilabschnittes der Einschnittverbreiterung.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 einen Umfangsabschnitt einer Profilrippe eines Laufstreifens eines Fahrzeugluftreifens,
Fig. 2 eine vergrößerte Schnittdarstellung entlang der Linie II-II der Fig. 1,
Fig. 3 eine vergrößerte Schnittdarstellung entlang der Linie III-III der Fig. 1,
Fig. 4 eine vergrößerte Schnittdarstellung entlang der Linie IV-IV der Fig. 1 und
Fig. 5 eine vergrößerte Schnittdarstellung entlang der Linie V-V der Fig. 1.

Gemäß der Erfindung ausgeführte Fahrzeugluftreifen sind insbesondere Fahrzeugluftreifen in Radialbauart für Kraftfahrzeuge, vorzugsweise für Personenkraftwagen oder Light-Trucks.

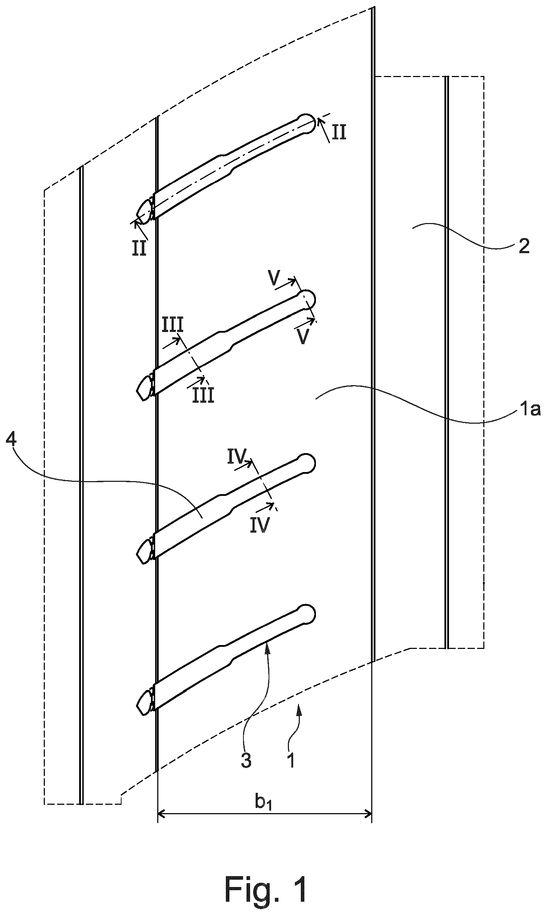

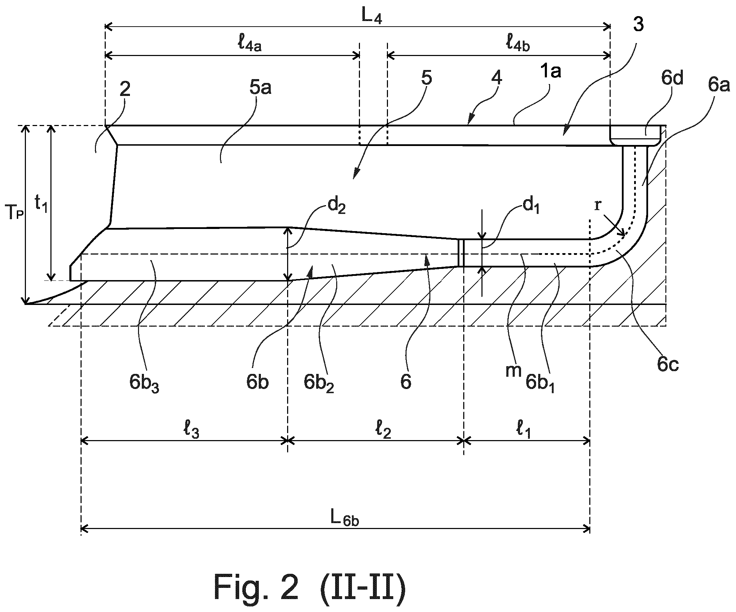

Fig. 1 zeigt beispielhaft einen Umfangsabschnitt einer über den Umfang eines Laufstreifens eines Fahrzeugluftreifens verlaufenden Profilrippe 1, die an beiden Seiten von je einer beim gezeigten Beispiel in Umfangsrichtung gerade umlaufenden Umfangsrille 2 begrenzt ist, welche in der für den jeweiligen Reifentyp vorgesehenen maximalen Profiltiefe T_{P} (Fig. 2) ausgeführt ist. An die Umfangsrillen 2 schließen weitere Profilrippen an, die lediglich angedeutet sind. Alternativ ist die Profilrippe 1 schulterseitig angeordnet und nur einseitig von einer Umfangsrille 2 begrenzt. Die Profilrippe 1 ist durch eine Vielzahl von parallel zueinander und weitgehend gerade oder insgesamt leicht bogenförmig verlaufenden Einschnitten 3 strukturiert, deren gegenseitige Abstände in Umfangsrichtung in der Größenordnung von 20,00 mm bis 35,00 mm betragen und die zur axialen Richtung unter einem spitzen Winkel verlaufen, welcher bis zu 45° beträgt. Die Einschnitte 3 weisen über ihren Verlauf eine weitgehend konstante Tiefe t₁ (Fig. 2) von 60 % bis 95 % der Profiltiefe T_{P} auf.

Die Einschnitte 3 münden mit ihren einen Enden in die eine Umfangsrille 2 ein, wobei bei der dargestellten Ausführung sämtliche Einschnitte 3 in die gleiche Umfangsrille 2, im Beispiel ist dies die links von der Profilrippe 1 verlaufende Umfangsrille 2, einmünden. Bei einer alternativen Ausführung mündet ein Teil der Einschnitte 3 in die eine, der andere Teil in die andere Umfangsrille 2. Die Einschnitte 3 enden innerhalb der Profilrippe 1, wobei sie sich zumindest bis in den mittleren Bereich bzw. die Mitte der Profilrippe 1 und insbesondere über bis zu 80 % der an der Außenfläche 1a in axialer Richtung ermittelten Breite b₁ der Profilrippe 1 erstrecken.

Die Ausgestaltung eines Einschnittes 3 wird nun anhand der Figuren 2 bis 5 näher erläutert. Der Einschnitt 3 weist, in radialer Richtung betrachtet, an der Außenfläche 1a der Profilrippe 1 eine Einschnittverbreiterung 4 auf, welche über die Erstreckung des Einschnittes 3 verläuft und am profilrippeninnenseitigen Ende des Einschnittes 3 bei einer Mündungsvertiefung 6d eines innerhalb der Profilrippe 1 rohrförmig ausgebildeten und L-förmig verlaufenden Kanals 6 endet. An die Einschnittverbreiterung 4 schließt in radialer Richtung ein Einschnittabschnitt 5 an, welcher von Einschnittwänden 5a begrenzt ist, die in radialer Richtung und parallel zueinander verlaufen, sodass der Einschnittabschnitt 5 eine konstante Breite b₂ aufweist, die in der Größenordnung von 0,40 mm bis 1,00 mm beträgt. Der Einschnittabschnitt 5 mündet innerhalb der Profilrippe 1 in den L-förmig verlaufenden Kanal 6 und ist derart von diesem an zwei Seiten umlaufen.

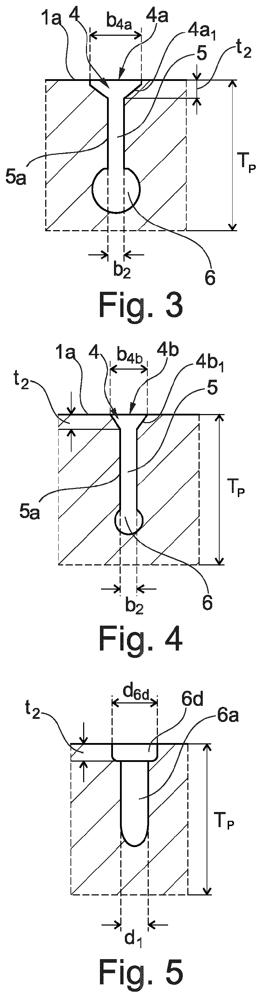

Der Kanal 6 weist einen am profilrippeninnenseitigen Ende des Einschnittes 5 in radialer Richtung verlaufenden und an der Außenfläche 1a der Profilrippe 1 über die erwähnte Mündungsvertiefung 6d nach außen mündenden Kanalabschnitt 6a (Fig. 2, Fig. 5), einen am radial inneren Endbereich des Einschnittabschnittes 5 entlang verlaufenden Kanalabschnitt 6b auf, welcher im Wesentlichen parallel zur Außenfläche 1a der Profilrippe 1 verläuft und gemeinsam mit dem Einschnittabschnitt 5 an der Umfangsrille 2 nach außen mündet. Zwischen den Kanalabschnitten 6a und 6b befindet sich eine Kanalrundung 6c (Fig. 2), die kreisbogenförmig und bei der dargestellten Ausführung entlang eines Viertelkreises verläuft, wobei der Kreisbogen, entlang der Mittellinie m des Kanals 6 betrachtet, einen Radius r von 2,30 mm bis 3,00 mm aufweist.

Der rohrförmige Kanal 6 weist einen kreisförmigen Querschnitt auf, welcher im Kanalabschnitt 6b variiert, da der Kanalabschnitt 6b in drei Teilabschnitte 6b₁, 6b₂ und 6b₃ gegliedert ist. Die Mittellinie m bildet die gemeinsame zentrale Achse sämtlicher Teilabschnitte 6b₁, 6b₂ und 6b₃ und verläuft daher bei der gezeigten Ausführung parallel zur Außenfläche 1a der Profilrippe 1. Im Kanalabschnitt 6a und in der Kanalrundung 6c weist der Kanal 6 einen insbesondere konstanten Durchmesser d₁ auf, welcher 1,20 mm bis 1,60 mm, insbesondere in der Größenordnung von 1,40 mm, beträgt. Der Teilabschnitt 6b₁ schließt unmittelbar an die Kanalrundung 6c an, weist dessen Durchmesser d₁ auf und erstreckt sich über eine Länge l₁ von 20% bis 30% der Gesamtlänge L_{6b} des Kanalabschnittes 6b entlang der Mittellinie m. Der an den Teilabschnitt 6b₁ anschließende Teilabschnitt 6b₂ erweitert sich in Richtung des an ihn anschließenden Teilabschnittes 6b₃ trichterförmig, weist an seinem beim Teilabschnitt 6b₃ befindlichen Ende einen Durchmesser d₂ von 2,00 mm bis 2,80 mm auf und erstreckt sich über eine Länge l₂ von 25 % bis 35 % der Länge L_{6b}. Der Teilabschnitt 6b₃ weist über seine Länge l₃ einen konstanten Durchmesser, welcher dem erwähnten Durchmesser d₂ des Teilabschnittes 6b₂ entspricht, auf, wobei die Länge l₃ 40 % bis 50 % der Länge L_{6b} beträgt.

Wie insbesondere die Schnittdarstellungen in Fig. 3 und Fig. 4 zeigen, weist die Einschnittverbreiterung 4 eine über ihre Erstreckung insbesondere konstante Tiefe t₂ von 6 % bis 12 % der Profiltiefe T_{P} auf und setzt sich aus zwei Teilabschnitten 4a, 4b mit voneinander unterschiedlichen Breiten b₄ₐ und b_{4b}, jeweils ermittelt an der Außenfläche 1a der Profilrippe 1, zusammen. Die Einschnittverbreiterung 4 weist ferner eine zwischen der Umfangsrille 2 und der Mündungsvertiefung 6d vorliegende Länge L₄ (Fig. 2) auf, wobei die beiden Teilabschnitte 4a (Fig. 3) und 4b (Fig. 4) jeweils eine Länge l₄ₐ (Fig. 2) und l_{4b} (Fig. 2) von 40 % bis 60 % der Erstreckungslänge L₄ (Fig. 2) der Einschnittverbreiterung 4 aufweisen. Im Teilabschnitt 4a beträgt die über dessen Länge l₄ₐ vorliegende und insbesondere konstante Breite b₄ₐ 2,50 mm bis 3,00 mm, im Teilabschnitt 4b die über dessen Länge l_{4b} vorliegende, ebenfalls insbesondere konstante Breite b_{4b} 2,20 mm bis 2,60 mm, wobei die Breite b_{4b} um 0,10 mm bis 0,30 mm geringer als die Breite b₄ₐ. Die beiden Teilabschnitte 4a und 4b gehen über eine lokale Verengung der Einschnittverbreiterung 4 ineinander über (vergl. Fig. 1).

Die Einschnittverbreiterung 4 weist in beiden Teilabschnitten 4a und 4b jeweils einander gegenüberliegende, gegenüber der radialen Richtung gleichermaßen geneigte Wände 4a₁ (Fig. 3) bzw. 4b₁ (Fig. 4) auf, welche derart geneigt sind, dass die Teilabschnitte 4a und 4b jeweils einen sich trichterförmig nach außen zur Außenfläche 1a der Profilrippe 1 verbreiternden Querschnitt aufweisen.

Die an den Teilabschnitt 4b anschließende, in Draufsicht kreisförmige Mündungsvertiefung 6d des Kanalabschnittes 6a weist insbesondere die Tiefe t₂ auf und besitzt über ihre Tiefe t₂ einen konstanten kreisförmigen Querschnitt, dessen Durchmesser d_{6d} um 0,30 mm bis 0,70 mm größer ist als die Breite b_{4b} des Teilabschnittes 4b (siehe Fig. 5b).

Bei einer alternativen, gesondert nicht dargestellten Ausführung, weisen die Teilabschnitte 4a und 4b einen U-förmigen Querschnitt mit den erwähnten Breiten b₄ₐ und b_{4b} auf.

Bei weiteren, nicht dargestellten Ausführungen verlaufen die Einschnitte 3 in Draufsicht wellen- oder zick-zack-förmig. Bei weiteren, ebenfalls nicht dargestellten Ausführungen, sind die Einschnittabschnitte 5 der Einschnitte 3 insbesondere gegengleich mit Erhebungen und Vertiefungen strukturiert und derart dreidimensional gestaltet.

### Bezugszeichenliste

- 1: Profilrippe
- 1a: Außenfläche
- 2: Umfangsrille
- 3: Einschnitt
- 4: Einschnittverbreiterung
- 4a, 4b: Teilabschnitte der Einschnittverbreiterung 4
- 4a₁, 4b₁: Wände der Teilabschnitte 4a, 4b
- 5: Einschnittabschnitt
- 5a: Einschnittwand
- 6: Kanal
- 6a, 6b: Kanalabschnitt
- 6b₁, 6b₂, 6b₃: Teilabschnitte des Kanalabschnittes 6b
- 6c: Kanalrundung
- 6d: Mündungsvertiefung
- b₁: Breite (Profilrippe 1)
- b₂: Breite (Einschnittabschnitt 5)
- b₄ₐ, b_{4b}: Breite der Teilabschnitte 4a, 4b
- d₁, d₂: Durchmesser der Teilabschnitte 6b₁, 6b₃
- d_{6d}: Durchmesser der Mündungsvertiefung 6d
- l₁, l₂, l₃: Länge (Teilabschnitte 6b₁, 6b₂, 6b₃)
- l₄ₐ, l_{4b}: Länge (Teilabschnitte 4a, 4b)
- L₄: Länge (Einschnittverbreiterung 4)
- L_{6b}: Länge (Kanalabschnitt 6b)
- m: Mittellinie
- r: Radius
- t₁: Tiefe (Einschnitt 3)
- t₂: Tiefe (Einschnittverbreiterung 4)
- T_{P}: Profiltiefe

## Patentansprüche

1. Fahrzeugluftreifen mit einem Laufstreifen mit durch Rillen (2), beispielsweise bis auf die vorgesehene Profiltiefe (T_{P}) ausgeführte Umfangsrillen (2) und/oder Querrillen, begrenzten Profilpositiven (1), wie Profilrippen (1) oder Profilblöcken, mit einer an der Laufstreifenperipherie befindlichen Außenfläche (1a) und mit Einschnitten (3), welche von einer Rille (2) ausgehend sich in das jeweilige Profilpositiv (1) erstrecken und innerhalb desselben enden, wobei jeder Einschnitt (3) innerhalb des Profilpositivs (1) von einem L-förmig verlaufenden rohrförmigen Kanal (6) mit einem kreisförmigen Querschnitt umlaufen ist, welcher einen ausschließlich an der Außenfläche (1a) des Profilpositivs (1) nach außen mündenden und sich insbesondere in radialer Richtung erstreckenden Kanalabschnitt (6a) und einen insbesondere parallel zur Außenfläche (1a) des Profilpositivs (1) entlang des Einschnittgrundes verlaufenden Kanalabschnitt (6b) aufweist, welcher mit dem Einschnitt (3) an der Rille (2) nach außen mündet,
**dadurch gekennzeichnet,**
**dass** der Einschnitt (3) zur Außenfläche (1a) des Profilpositivs (1) eine über seine Erstreckung bis zu dem an der Außenfläche (1a) des Profilpositivs (1) nach außen mündenden Kanalabschnitt (6a) ausgebildete, nutförmigen Einschnittverbreiterung (4) aufweist, welche an der Außenfläche (1a) des Profilpositivs (1) eine Breite (b₄ₐ, b_{4b}) aufweist, die 1,60 mm bis 2,70 mm beträgt und an welche in radialer Richtung ein Einschnittabschnitt (5) mit einer konstanten Breite (b₂) von 0,40 mm bis 1,00 mm anschließt, welcher in den L-förmig verlaufenden Kanal (6) einmündet, dessen Durchmesser (d₁, d₂) um bis zu 1,80 mm größer ist als die Breite (b₂) des Einschnittabschnittes (5), wobei die Einschnittverbreiterung (4) und der Einschnittabschnitt (5) gemeinsam mit dem entlang des Einschnittgrundes verlaufenden Kanalabschnitt (6b) in die Rille (2) einmünden.

2. Fahrzeugluftreifen nach Anspruch 1, **dadurch gekennzeichnet, dass** die Einschnittverbreiterung (4) eine insbesondere konstante Tiefe (t₂) von 6 % bis 12 % der Profiltiefe (T_{P}) aufweist.

3. Fahrzeugluftreifen nach Anspruch 1 oder 2, **dadurch gekennzeichnet, dass** sich die Einschnittverbreiterung (4) aus zwei über eine lokale Verengung miteinander verbundenen, an der Außenfläche (1a) des Profilpositivs (1) unterschiedliche, jedoch insbesondere jeweils konstante Breiten (b₄ₐ, b_{4b}) aufweisenden Teilabschnitten (4a, 4b) zusammensetzt, wobei der breitere Teilabschnitt (4a) in die Rille (2) einmündet und der andere in den an der Außenfläche (1a) des Profilpositivs (1) nach außen mündenden Kanalabschnitt (6a) mündet.

4. Fahrzeugluftreifen nach Anspruch 3, **dadurch gekennzeichnet, dass** die beiden Teilabschnitte (4a, 4b) der Einschnittverbreiterung (4) jeweils eine Länge (l₄ₐ, l_{4b}) von 40 % bis 60 % der Erstreckungslänge (L₄) der Einschnittverbreiterung (4) aufweisen.

5. Fahrzeugluftreifen nach Anspruch 3 oder 4, **dadurch gekennzeichnet, dass** die Breite (b₄ₐ) des breiteren Teilabschnittes (4a) 2,50 mm bis 3,00 mm beträgt und die Breite (b_{4b}) des schmäleren Teilabschnittes (4b) um 0,10 mm bis 0,30 mm geringer als die Breite (b₄ₐ) des breiteren Teilabschnittes (4a).

6. Fahrzeugluftreifen nach einem oder mehreren der Ansprüche 1 bis 5, **dadurch gekennzeichnet, dass** sich die Einschnittverbreiterung (4) im Querschnitt und vom anschließenden Einschnittabschnitt (5) ausgehend nach außen trichterförmig verbreitert.

7. Fahrzeugluftreifen nach einem oder mehreren der Ansprüche 1 bis 5, **dadurch gekennzeichnet, dass** die Einschnittverbreiterung (4) einen U-förmigen Querschnitt aufweist.

8. Fahrzeugluftreifen nach Anspruch 1, **dadurch gekennzeichnet, dass** der Kanal (6) zwischen dem an der Außenfläche (1a) des Profilpositivs (1) nach außen mündenden Kanalabschnitt (6a) und dem in die Rille (2) mündenden Kanalabschnitt (6b) eine Kanalrundung (6c) aufweist, die kreisbogenförmig verläuft, wobei der Kreisbogen, entlang der Mittellinie (m) des Kanals (6) betrachtet, einen Radius (r) von 2,30 mm bis 3,00 mm aufweist.

9. Fahrzeugluftreifen nach Anspruch 1 oder 8, **dadurch gekennzeichnet, dass** der in die Rille (2) mündende Kanalabschnitt (6b) in drei Teilabschnitte (6b₁, 6b₂, 6b₃) gegliedert ist, wobei der in die Rille (2) mündende Teilabschnitt (6b₃) den größten Durchmesser (d₂), der an die Kanalrundung (6c) anschließende Teilabschnitt (6b₁) den kleinsten Durchmesser (d₁) aufweist und wobei sich der mittlere Teilabschnitt (6b₂) ausgehend vom Teilabschnitt (6b₁) mit dem kleinsten Durchmesser (d₁) bis zum Teilabschnitt (6b₃) mit dem größten Durchmesser (d₂) trichterförmig erweitert.

10. Fahrzeugluftreifen nach Anspruch 9, **dadurch gekennzeichnet, dass** der an der Außenfläche (1a) des Profilpositivs nach außen mündende Kanalabschnitt (6a), die Kanalrundung (6c) und der an die Kanalrundung (6c) anschließende Teilabschnitt (6b₁) des in die Rille (2) mündenden Kanalabschnittes (6b) einen übereinstimmenden und insbesondere konstanten Durchmesser (d₁), welcher 1,20 mm bis 1,60 mm beträgt, aufweisen.

11. Fahrzeugluftreifen nach Anspruch 9 oder 10, **dadurch gekennzeichnet, dass** der in die Rille (2) mündende Teilabschnitt (6b₃) einen insbesondere konstanten Durchmesser (d₂) von 2,00 mm bis 2,80 mm aufweist.

12. Fahrzeugluftreifen nach einem oder mehreren der Ansprüche 9 bis 11, **dadurch gekennzeichnet, dass**, jeweils entlang der zentralen Mittellinie (m) des zwischen der Kanalrundung (6c) und der Rille (2) verlaufenden Kanalabschnittes (6b) ermittelt, der an die Kanalrundung (6c) anschließende Teilabschnitt (6b₁) eine Länge (l₁) von 20% bis 30%, der sich trichterförmig erweiternde Teilabschnitt (6b₂) eine Länge (l₂) von 25 % bis 35 % und der in die Rille (2) mündende Teilabschnitt (6b₃) eine Länge (l₃) von 40 % bis 50 % der Länge (L_{6b}) des Kanalabschnittes (6b) aufweist.

13. Fahrzeugluftreifen nach einem oder mehreren der Ansprüche 1 oder 8 bis 12, **dadurch gekennzeichnet, dass** der an der Außenfläche (1a) des Profilpositivs (1) nach außen mündende Kanalabschnitt (6a) mit einer in Draufsicht kreisförmigen Mündungsvertiefung (6d) einmündet, welche eine Tiefe (t₂) aufweist, die der Tiefe (t₂) der Einschnittverbreiterung (4) entspricht.

14. Fahrzeugluftreifen nach Anspruch 13, **dadurch gekennzeichnet, dass** die Mündungsvertiefung (6d) über ihre Tiefenerstreckung einen insbesondere konstanten Durchmesser (d_{6d}) aufweist, welcher um 0,30 mm bis 0,70 mm größer ist als die Breite (b_{4b}) des einmündenden Teilabschnittes (4b) der Einschnittverbreiterung (4).

## Claims

1. Pneumatic vehicle tyre having a tread with profile positives (1), such as profile ribs (1) or profile blocks, which are delimited by grooves (2), for example circumferential grooves (2) and/or transverse grooves embodied to the provided profile depth (T_{P}), having an outer surface (1a) which is located on the tread periphery and having incisions (3) which, proceeding from a respective groove (2), extend into the respective profile positive (1) and terminate within the latter, wherein each incision (3) within the profile positive (1) is encircled by a tubular channel (6) which runs in an L-shape and has a circular cross section and which has a channel portion (6a) which opens outwards exclusively at the outer surface (1a) of the profile positive (1) and extends in particular in the radial direction, and a channel portion (6b) which runs in particular parallel to the outer surface (1a) of the profile positive (1) along the incision base and which by way of the incision (3) opens outwards at the groove (2),
**characterized in that**
the incision (3) has towards the outer surface (1a) of the profile positive (1) a notch-shaped incision enlargement (4) which is formed over the extent of said incision up to the channel portion (6a) that open outwards at the outer surface (1a) of the profile positive (1), and which at the outer surface (1a) of the profile positive (1) has a width (b₄ₐ, b_{4b}) which is 1.60 mm to 2.70 mm, the latter in the radial direction being adjoined by an incision portion (5) with a constant width (b₂) of 0.40 mm to 1.00 mm that opens into the L-shaped channel (6), the diameter (d₁, d₂) of the latter being up 1.80 mm larger than the width (b₂) of the incision portion (5), wherein the incision enlargement (4) and the incision portion (5), conjointly with the channel portion (6b) running along the incision base, open into the groove (2).

2. Pneumatic vehicle tyre according to Claim 1, **characterized in that** the incision enlargement (4) has an in particular constant depth (t₂) of 6% to 12% of the profile depth (T_{P}).

3. Pneumatic vehicle tyre according to Claim 1 or 2, **characterized in that** the incision enlargement (4) is composed of two sub-portions (4a, 4b) which are interconnected by a local constriction and have on the outer surface (1a) of the profile positive (1) different, but in particular in each case constant, widths (b₄ₐ, b_{4b}), wherein the wider sub-portion (4a) opens into the groove (2) and the other opens out into the channel portion (6a) that opens outwards at the outer surface (1a) of the profile positive (1).

4. Pneumatic vehicle tyre according to Claim 3, **characterized in that** the two sub-portions (4a, 4b) of the incision enlargement (4) each have a length (l₄ₐ, l_{4b}) of 40% to 60% of the length of extent (L₄) of the incision enlargement (4).

5. Pneumatic vehicle tyre according to Claim 3 or 4, **characterized in that** the width (b₄ₐ) of the wider sub-portion (4a) is 2.50 mm to 3.00 mm, and the width (b_{4b}) of the narrower sub-portion (4b) is 0.10 mm to 0.30 mm less than the width (b₄ₐ) of the wider sub-portion (4a).

6. Pneumatic vehicle tyre according to one or a plurality of Claims 1 to 5, **characterized in that** the incision enlargement (4) in the cross section, and proceeding from the adjoining incision portion (5), widens outwards in the shape of a funnel.

7. Pneumatic vehicle tyre according to one or a plurality of Claims 1 to 5, **characterized in that** the incision enlargement (4) has a U-shaped cross section.

8. Pneumatic vehicle tyre according to Claim 1, **characterized in that** the channel (6) between the channel portion (6a) that opens outwards at the outer surface (1a) of the profile positive (1) and the channel portion (6b) that opens into the groove (2) has a channel radius (6c) running in an arcuate manner, wherein the arc, when viewed along the centreline (m) of the channel (6), has a radius (r) of 2.30 mm to 3.00 mm.

9. Pneumatic vehicle tyre according to Claim 1 or 8, **characterized in that** the channel portion (6b) that opens into the groove (2) is divided into three sub-portions (6b₁, 6b₂, 6b₃), wherein the sub-portion (6b₃) that opens into the groove (2) has the largest diameter (d₂), the sub-portion (6b₁) that adjoins the channel radius (6c) has the smallest diameter (d₁), and wherein the central sub-portion (6b₂), proceeding from the sub-portion (6b₁) with the smallest diameter (d₁), widens in the shape of a funnel to the sub-portion (6b₃) with the largest diameter (d₂).

10. Pneumatic vehicle tyre according to Claim 9, **characterized in that** the channel portion (6a) that opens outwards at the outer surface (1a) of the profile positive, the channel radius (6c) and the sub-portion (6b₁), adjoining the channel radius (6c), of the channel portion (6b) that opens into the groove (2) have an identical and in particular constant diameter (d₁) which is 1.20 mm to 1.60 mm.

11. Pneumatic vehicle tyre according to Claim 9 or 10, **characterized in that** the sub-portion (6b₃) that opens into the groove (2) has an in particular constant diameter (d₂) of 2.00 mm to 2.80 mm.

12. Pneumatic vehicle tyre according to one or a plurality of Claims 9 to 11, **characterized in that**, determined in each case along the central centreline (m) of the channel portion (6b) running between the channel radius (6c) and the groove (2), the sub-portion (6b₁) that adjoins the channel radius (6c) has a length (l₁) of 20% to 30%, the sub-portion (6b₂) that widens in the shape of a funnel has a length (l₂) of 25% to 35%, and the sub-portion (6b₃) that opens into the groove (2) has a length (l₃) of 40% to 50% of the length (L_{6b}) of the channel portion (6b).

13. Pneumatic vehicle tyre according to one or a plurality of Claims 1 or 8 to 12, **characterized in that** the channel portion (6a) that opens outwards at the outer surface (1a) of the profile positive (1) opens out by way of a mouth depression (6d) which is circular in top view and has a depth (t₂) which corresponds to the depth (t₂) of the incision enlargement (4).

14. Pneumatic vehicle tyre according to Claim 13, **characterized in that** the mouth depression (6d) has over its extent of depth an in particular constant diameter (d_{6d}) which is 0.30 mm to 0.70 mm larger than the width (b_{4b}) of the merging sub-portion (4b) of the incision enlargement (4).

## Revendications

1. Pneumatique de véhicule, avec une bande de roulement avec des éléments positifs de profil (1), tels que des nervures de profil (1) ou des blocs de profil, délimités par des rainures (2), par exemple de rainures circonférentielles (2) et/ou des rainures transversales réalisées par exemple jusqu'à la profondeur de profil prévue (T_{P}), avec une surface extérieure (1a) se trouvant à la périphérie de la bande de roulement et avec des incisions (3), qui s'étendent à partir d'une rainure (2) dans l'élément positif de profil (1) respectif et se terminent à l'intérieur de celui-ci, chaque incision (3) à l'intérieur de l'élément positif de profil (1) étant entourée par un canal tubulaire (6) s'étendant en forme de L avec une section transversale circulaire, qui présente une section de canal (6a) débouchant exclusivement vers l'extérieur au niveau de la surface extérieure (1a) de l'élément positif de profil (1) et s'étendant notamment dans la direction radiale, et une section de canal (6b) s'étendant notamment parallèlement à la surface extérieure (1a) de l'élément positif de profil (1) le long du fond d'incision, qui débouche vers l'extérieur avec l'incision (3) au niveau de la rainure (2),
**caractérisé**
**en ce que** l'incision (3) présente, par rapport à la surface extérieure (1a) de l'élément positif de profil (1), un élargissement d'incision en forme de rainure (4) réalisé sur son extension jusqu'à la section de canal (6a) débouchant vers l'extérieur au niveau de la surface extérieure (1a) de l'élément positif de profil (1), qui présente, sur la surface extérieure (1a) de l'élément positif de profil (1), une largeur (b₄ₐ, b_{4b}) de 1,60 mm à 2,70 mm et auquel se raccorde, dans la direction radiale, une section d'incision (5) d'une largeur constante (b₂) de 0,40 mm à 1,00 mm, qui débouche dans le canal s'étendant en forme de L (6) dont le diamètre (d₁, d₂) est supérieur de jusqu'à 1,80 mm à la largeur (b₂) de la section d'incision (5), l'élargissement d'incision (4) et la section d'incision (5) débouchant conjointement avec la section de canal (6b) s'étendant le long du fond d'incision dans la rainure (2).

2. Pneumatique de véhicule selon la revendication 1, **caractérisé en ce que** l'élargissement d'incision (4) présentent une profondeur (t₂) notamment constante, de 6 % à 12 % de la profondeur de profil (T_{P}).

3. Pneumatique de véhicule selon la revendication 1 ou 2, **caractérisé en ce que** l'élargissement d'incision (4) se compose de deux sections partielles (4a, 4b) reliées entre elles par un rétrécissement local, différentes sur la surface extérieure (1a) de l'élément positif de profil (1), mais présentant notamment des largeurs constantes (b₄ₐ, b_{4b}), la section partielle la plus large (4a) débouchant dans la rainure (2) et l'autre débouchant dans la section de canal (6a) débouchant vers l'extérieur au niveau de la surface extérieure (1a) de l'élément positif de profil (1).

4. Pneumatique de véhicule selon la revendication 3, **caractérisé en ce que** les deux sections partielles (4a, 4b) de l'élargissement d'incision (4) présentent chacune une longueur (l₄ₐ, l_{4b}) de 40 % à 60 % de la longueur (L₄) de l'élargissement d'incision (4).

5. Pneumatique de véhicule selon la revendication 3 ou 4, **caractérisé en ce que** la largeur (b₄ₐ) de la section partielle la plus large (4a) est de 2,50 mm à 3,00 mm et la largeur (b_{4b}) de la section partielle la plus étroite (4b) est inférieure de 0,10 mm à 0,30 mm à la largeur (b₄ₐ) de la section partielle la plus large (4a).

6. Pneumatique de véhicule selon une ou plusieurs des revendications 1 à 5, **caractérisé en ce que** l'élargissement d'incision (4) s'élargit en forme d'entonnoir dans la section transversale et vers l'extérieur à partir de la section d'incision adjacente (5).

7. Pneumatique de véhicule selon une ou plusieurs des revendications 1 à 5, **caractérisé en ce que** l'élargissement d'incision (4) présente une section transversale en forme de U.

8. Pneumatique de véhicule selon la revendication 1, **caractérisé en ce que** le canal (6) présente, entre la section de canal (6a) débouchant vers l'extérieur au niveau de la surface extérieure (1a) de l'élément positif de profil (1) et la section de canal (6b) débouchant dans la rainure (2), un arrondi de canal (6c) qui s'étend en forme d'arc de cercle, l'arc de cercle, considéré le long de la ligne médiane (m) du canal (6), présentant un rayon (r) de 2,30 mm à 3,00 mm.

9. Pneumatique de véhicule selon la revendication 1 ou 8, **caractérisé en ce que** la section de canal (6b) débouchant dans la rainure (2) est divisée en trois sections partielles (6b₁, 6b₂, 6b₃), la section partielle (6b₃) débouchant dans la rainure (2) présentant le plus grand diamètre (d₂), la section partielle (6b₁) adjacente à l'arrondi de canal (6c) présentant le plus petit diamètre (d₁), et la section partielle intermédiaire (6b₂) s'élargissant en forme d'entonnoir à partir de la section (6b₁) ayant le plus petit diamètre (d₁) jusqu'à la section (6b₃) ayant le plus grand diamètre (d₂).

10. Pneumatique de véhicule selon la revendication 9, **caractérisé en ce que** la section de canal (6a) débouchant vers l'extérieur au niveau de la surface extérieure (1a) de l'élément positif de profil, l'arrondi de canal (6c) et la section partielle (6b₁) de la section de canal (6b) débouchant dans la rainure (2) et se raccordant à l'arrondi de canal (6c) présentent un diamètre (d₁) identique et notamment constant, qui est de 1,20 mm à 1,60 mm.

11. Pneumatique de véhicule selon la revendication 9 ou 10, **caractérisé en ce que** la section partielle (6b₃) débouchant dans la rainure (2) présente un diamètre (d₂) notamment constant de 2,00 mm à 2,80 mm.

12. Pneumatique de véhicule selon une ou plusieurs des revendications 9 à 11, **caractérisé en ce que**, déterminé respectivement le long de la ligne médiane centrale (m) de la section de canal (6b) s'étendant entre l'arrondi de canal (6c) et la rainure (2), la section partielle (6b₁) adjacente à l'arrondi de canal (6c) présente une longueur (l₁) de 20 % à 30 %, la section partielle (6b₂) s'élargissant en forme d'entonnoir présente une longueur (l₂) de 25 % à 35 %, et la section partielle (6b₃) débouchant dans la rainure (2) présente une longueur (l₃) de 40 % à 50 % de la longueur (L_{6b}) de la section de canal (6b).

13. Pneumatique de véhicule selon une ou plusieurs des revendications 1 ou 8 à 12, **caractérisé en ce que** section de canal (6a) débouchant vers l'extérieur au niveau de la surface extérieure (1a) de l'élément positif de profil (1) débouche avec un renfoncement d'embouchure (6d) circulaire en vue de dessus, qui présente une profondeur (t₂) correspondant à la profondeur (t₂) de l'élargissement d'incision (4).

14. Pneumatique de véhicule selon la revendication 13, **caractérisé en ce que** le renfoncement d'embouchure (6d) présente, sur son extension en profondeur, un diamètre (d_{6d}) notamment constant qui est supérieur de 0,30 mm à 0,70 mm à la largeur (b_{4b}) de la section partielle débouchante (4b) de l'élargissement d'incision (4).
